(19)

Europäisches
Patentamt
European
Patent Office
Office européen
des brevets

(11) **EP 3 290 164 A2**

(12) **EUROPEAN PATENT APPLICATION**

(43) Date of publication:
**07.03.2018  Bulletin 2018/10**

(51) Int Cl.:
***B25J 9/16*** *(2006.01)*

(21) Application number: **17188306.9**

(22) Date of filing: **29.08.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **31.08.2016   JP 2016168977**

(71) Applicant: **Seiko Epson Corporation
Tokyo 160-8801 (JP)**

(72) Inventors:
• **Tsukamoto, Kentaro
Nagano, 392-8502 (JP)**
• **Setsuda, Nobuyuki
Nagano, 392-8502 (JP)**

(74) Representative: **Hoffmann Eitle
Patent- und Rechtsanwälte PartmbB
Arabellastraße 30
81925 München (DE)**

(54) **ROBOT, ROBOT CONTROL DEVICE, AND ROBOT SYSTEM**

(57)     A robot (20) includes an arm. A predetermined region in an image pickup region (21) where an image pickup section (21) provided in the arm is capable of picking up an image coincides with, among image regions of a picked-up image picked up by the image pickup section (21) when the arm is moved to a position for picking up an image of each of a plurality of target objects (O), the image region including the target object or a region smaller than the image region. The robot (20) detects information concerning the target object on the basis of the picked-up image of the target object picked up by the image pickup section (21) in the position and grips the target object on the basis of the detected information.

FIG. 1

**Description**

BACKGROUND

1. Technical Field

The present invention relates to a robot, a robot control device, and a robot system.

2. Related Art

There have been performed researches and developments of a technique for causing a robot to perform work on the basis of a picked-up image picked up by an image pickup section.

Concerning the technique, there is known a robot control method for, in a state in which a tray loaded with one or more work target objects of a robot hand capable of controlling work content is placed in a position where work should be performed by the robot hand, picking up an image such that all of the work target objects are included in the image, detecting the respective work target objects from picked-up image data, determining whether position errors of the detected respective work target objects with respect to normal positions are within an allowable range, executing normal work on the work target objects, the position errors of which are determined as being within the allowable range, and not executing the normal work on the work target objects, the position errors of which are determined as being not within the allowable range (see JP-A-2011-110629 (Patent Literature 1)).

In such a robot control method, when it is attempted to pick up an image of an entire work target object, even an image of a background such as the tray on which the work target object is disposed and other objects is picked up together with the image of the work target object. As a result, in the robot control method, at least a part of the background included in the picked-up image of the work target object is sometimes erroneously detected as the work target object. That is, in the robot control method, detection accuracy for detecting, from the picked-up image, information concerning the work target object such as the position and the posture of the work target object is sometimes deteriorated.

SUMMARY

An aspect of the invention is directed to a robot including an arm. A predetermined region in an image pickup region where an image pickup section provided in the arm is capable of picking up an image coincides with, among image regions of a picked-up image picked up by the image pickup section when the arm is moved to a position for picking up an image of each of a plurality of target objects, the image region including the target object or a region smaller than the image region. The robot detects information concerning the target object on the basis of the picked-up image of the target object picked up by the image pickup section in the position and grips the target object on the basis of the detected information.

With this configuration, in the robot, the predetermined region in the image pickup region where the image pickup section provided in the arm is capable of picking up an image coincides with, among image regions of a picked-up image picked up by the image pickup section when the arm is moved to the position for picking up an image of each of a plurality of target objects, the image region including the target object or a region smaller than the image region. The robot detects information concerning the target object on the basis of the picked-up image of the target object picked up by the image pickup section in the position for picking up an image of each of the plurality of target objects and grips the target object on the basis of the detected information. Consequently, the robot can accurately perform work based on the information concerning the target object.

As another aspect of the invention, the robot according to the aspect may be configured such that each of the plurality of target objects is disposed in each of cells in a pallet, and the image region including the target object is the image region on an inner side of the cell in the image region of the picked-up image.

With this configuration, in the robot, the predetermined region in the image pickup region where the image pickup section provided in the arm is capable of picking up an image coincides with, among image regions of a picked-up image picked up by the image pickup section, the image region on the inner side of the cell in the pallet or a region smaller than the image region. The robot detects information concerning the target object on the basis of the picked-up image of the target object picked up by the image pickup section in the position for picking up an image of each of the plurality of target objects and grips the target object on the basis of the detected information. Consequently, the robot can accurately perform work based on the information concerning the target object disposed in each of the cells in the pallet.

As another aspect of the invention, the robot according to the aspect may be configured such that a second angle, which is an angle of the predetermined region, changes according to a change of a first angle, which is an angle of each of joints included in the robot.

With this configuration, in the robot, the second angle, which is the angle of the predetermined region, changes according to a change of the first angle, which is the angle of each of the joints included in the robot. Consequently, the robot can accurately perform work based on the information concerning the target object on the basis of the first angle, which is the angle of each of the joints included in the robot.

As another aspect of the invention, the robot according to the aspect may be configured such that the first angle is an angle with respect to a first reference direction associated with each of the joints, the second angle is an angle between a second reference direction associated with the image pickup section and a third reference direction associated with the predetermined region, and the third reference direction does not change in the change of the second angle.

With this configuration, in the robot, the third reference direction does not change in the change of the second angle. Consequently, the robot can accurately perform work based on the information concerning the target object on the basis of the first angle, which is the angle with respect to the first reference direction associated with each of the joints included in the robot and is the angle of each of the joints.

As another aspect of the invention, the robot according to the aspect may be configured such that the first angle is an angle with respect to a first reference direction associated with each of the joints, the second angle is an angle between a second reference direction associated with the image pickup section and a third reference direction associated with the predetermined region, and the second angle changes according to the first angle and a gain.

With this configuration, in the robot, the second angle changes according to the first angle and the gain. Consequently, the robot can accurately perform work based on the information concerning the target object on the basis of the first angle, which is the angle with respect to the first reference direction associated with each of the joints included in the robot and is the angle of each of the joints, and the gain.

As another aspect of the invention, the robot according to the aspect may be configured such that the robot is capable of operating according to two modes, that is, a first mode in which the second angle changes according to the first angle and a second mode in which the second angle does not change according to the first angle.

With this configuration, the robot is capable of operating according to the two modes, that is, the first mode in which the second angle changes according to the first angle and the second mode in which the second angle does not change according to the first angle. Consequently, the robot can accurately perform work based on the information concerning the target object according to an operation mode desired by the user.

As another aspect of the invention, the robot according to the aspect may be configured such that a shape of the predetermined region is a shape corresponding to a shape of the image region including the target object or a region smaller than the image region.

With this configuration, in the robot, the shape of the predetermined region is the shape corresponding to the shape of the image region including the target object or the region smaller than the image region. Consequently, the robot can accurately perform work based on the information concerning the target object on the basis of the predetermined region having the shape corresponding to the shape of the image region including the target object or the region smaller than the image region.

As another aspect of the invention, the robot according to the aspect may be configured such that, when the picked-up image is displayed on a display section, the predetermined region is displayed on the display section together with the picked-up image.

With this configuration, in the robot, when the picked-up image is displayed on the display section, the predetermined region is displayed on the display section together with the picked-up image. Consequently, the robot can cause a user to confirm whether the target object is included in the predetermined region.

Another aspect of the invention is directed to a robot control device that controls the robot according to the aspect explained above.

With this configuration, the robot control device causes the predetermined region in the image pickup region where the image pickup section provided in the arm is capable of picking up an image to coincide with, among image regions of a picked-up image picked up by the image pickup section when the arm is moved to the position for picking up an image of each of a plurality of target objects, the image region including the target object or a region smaller than the image region, detects information concerning the target object on the basis of the picked-up image of the target object picked up by the image pickup section in the position for picking up an image of each of the plurality of target objects, and causes the robot to grip the target object on the basis of the detected information. Consequently, the robot control device can suppress deterioration in detection accuracy of the information concerning the target object.

Another aspect of the invention is directed to a robot system including: the robot according to the aspect explained above; and a robot control device configured to control the robot.

With this configuration, the robot system causes the predetermined region in the image pickup region where the image pickup section provided in the arm is capable of picking up an image to coincide with, among image regions of a picked-up image picked up by the image pickup section when the arm is moved to the position for picking up an image of each of a plurality of target objects, the image region including the target object or a region smaller than the image region, detects information concerning the target object on the basis of the picked-up image of the target object

3

picked up by the image pickup section in the position for picking up an image of each of the plurality of target objects, and causes the robot to grip the target object on the basis of the detected information. Consequently, the robot system can suppress deterioration in detection accuracy of the information concerning the target object.

As explained above, in the robot, the predetermined region in the image pickup region where the image pickup section provided in the arm is capable of picking up an image coincides with, among image regions of a picked-up image picked up by the image pickup section when the arm is moved to the position for picking up an image of each of a plurality of target objects, the image region including the target object or a region smaller than the image region. The robot detects information concerning the target object on the basis of the picked-up image of the target object picked up by the image pickup section in the position for picking up an image of each of the plurality of target objects and grips the target object on the basis of the detected information. Consequently, the robot can accurately perform work based on the information concerning the target object.

The robot control device and the robot system cause the predetermined region in the image pickup region where the image pickup section provided in the arm is capable of picking up an image to coincide with, among image regions of a picked-up image picked up by the image pickup section when the arm is moved to the position for picking up an image of each of a plurality of target objects, the image region including the target object or a region smaller than the image region, detect information concerning the target object on the basis of the picked-up image of the target object picked up by the image pickup section in the position for picking up an image of each of the plurality of target objects, and cause the robot to grip the target object on the basis of the detected information. Consequently, the robot control device and the robot system can suppress deterioration in detection accuracy of the information concerning the target object.

BRIEF DESCRIPTION OF THE DRAWINGS

The invention will be described with reference to the accompanying drawings, wherein like numbers reference like elements.

Fig. 1 is a diagram showing an example of the configuration of a robot system according to an embodiment; the robot system includes a robot and a robot control device.

Fig. 2 is a diagram showing an example of a pallet.

Fig. 3 is a diagram showing an example of a hardware configuration of the robot control device.

Fig. 4 is a diagram showing an example of a functional configuration of the robot control device.

Fig. 5 is a showing an example of an appearance of an image pickup region and a predetermined region in a state in which a position and a posture of a control point coincide with an initial position and posture and a robot in the state.

Fig. 6 is a diagram showing an example of a flow of processing in which the robot control device causes a storing section to store initial position and posture information.

Fig. 7 is a diagram showing an example of a picked-up image displayed on a display section and a frame indicating a range included in the predetermined region set on an image pickup device of an image pickup section in the picked-up image.

Fig. 8 is a diagram for explaining processing in step S60.

Fig. 9 is a diagram showing an example of an appearance of the image pickup region and the predetermined region in a state in which the position of the control point coincides with an image pickup position where the image pickup section picks up an image of a cell and the robot in the state.

Fig. 10 is a diagram illustrating first angles of a first joint and a second joint in the state shown in Fig. 9 and a relative angle of the predetermined region with respect to the image pickup region.

Fig. 11 is a diagram showing another example of the picked-up image displayed on the display section and the frame indicating the range included in the predetermined region set on the image pickup device of the image pickup section in the picked-up image.

Fig. 12 is a diagram showing an example of a flow of processing in which the robot control device causes the robot to perform predetermined work.

Fig. 13 is a diagram showing an example of an appearance of the image pickup region and the predetermined region in a state in which the position and the posture of the control point coincide with the image pickup position where the image pickup section picks up an image of the cell and the robot in the state.

DESCRIPTION OF EXEMPLARY EMBODIMENTS

Embodiment

An embodiment of the invention is explained below with reference to the drawings.

Configuration of a robot system

First, the configuration of a robot system 1 is explained.

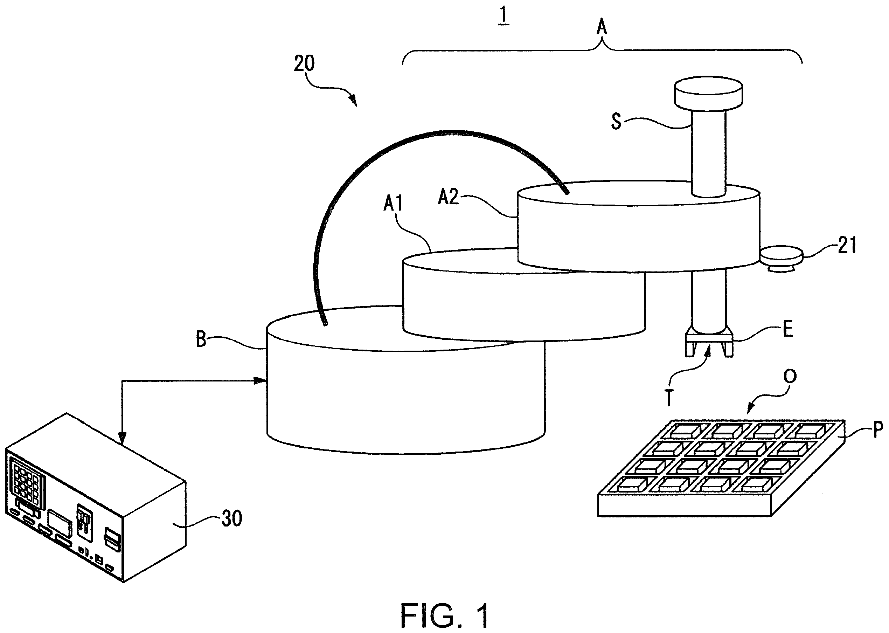

Fig. 1 is a diagram showing an example of the configuration of the robot system 1 according to the embodiment. The robot system 1 includes a robot 20 and a robot control device 30.

The robot 20 is a SCARA robot. Note that the robot 20 may be another robot such as a Cartesian coordinate robot, a single-arm robot, or a double-arm robot instead of the SCARA robot. The Cartesian coordinate robot is, for example, a gantry robot.

In the example shown in Fig. 1, the robot 20 is set on a floor surface. Note that the robot 20 may be set on a wall surface, a ceiling surface, a table, a jig, the upper surface of a stand, or the like instead of the floor surface. In the following explanation, for convenience of explanation, a direction orthogonal to a surface on which the robot 20 is set, that is, a direction from the robot 20 to the surface is referred to as lower and a direction opposite to the direction is referred to as upper. The direction orthogonal to the surface on which the robot 20 is set, that is, the direction from the center of gravity of the robot 20 to the surface is, for example, a negative direction of a Z axis in a world coordinate system or a negative direction of a Z axis in a robot coordinate system RC.

The robot 20 includes a supporting stand B set on the floor surface, a movable section A, and an image pickup section 21. The movable section A includes a first arm A1 supported to be capable of turning around a not-shown first axis AX1 by the supporting stand B, a second arm A2 supported to be capable of turning around a not-shown second axis AX2 by the first arm A1, and a shaft (an actuating shaft) S supported to be capable of turning around a not-shown third axis AX3 and capable of translating in the axial direction of the third axis AX3 by the second arm A2. The movable section A is an example of an arm.

The shaft S is a shaft body having a columnar shape. A not-shown ball screw groove and a not-shown spline groove are formed on the circumferential surface of the shaft S. The shaft S is provided to vertically pierce through an end portion on the opposite side of the first arm A1 of end portions of the second arm A2. In the shaft S, in this example, a disk-shaped flange having a radius larger than the radius of the column is provided at an end portion on the upper side of end portions of the shaft S. The center axis of the column coincides with the center axis of the flange.

An end effector E is provided at the end portion of the shaft S where the flange is not provided. In this example, the end effector E is an end effector including a finger section capable of gripping an object. Note that the end effector E may be an end effector capable of lifting an object with suction of the air, a magnetic force, a jig, or the like or another end effector instead of the end effector including the finger section.

The end effector E is communicatively connected to the robot control device 30 by a cable. Consequently, the end effector E performs operation based on a control signal acquired from the robot control device 30. Note that wired communication via the cable is performed according to a standard such as Ethernet (registered trademark) or USB (Universal Serial Bus). The end effector E may be connected to the robot control device 30 by wireless communication performed according to communication standard such as Wi-Fi (registered trademark).

The supporting stand B is fixed to the floor surface. The supporting stand B includes a not-shown first joint. The first axis AX1 refers to a turning axis of the first joint. The first joint includes a not-shown actuator and turns the first arm A1 around the first axis AX1 on the basis of a control signal acquired from the robot control device 30. The first joint is an example of a joint included in the robot.

Since the first arm A1 turns around the first axis AX1, the first arm A1 moves in the horizontal direction. In this example, the horizontal direction is a direction orthogonal to the vertical direction. The horizontal direction is, for example, a direction along an XY plane in the world coordinate system or a direction along an XY plane in the robot coordinate system RC.

The second arm A2 includes a not-shown second joint. The second axis AX2 refers to a turning axis of the second joint. The second joint includes a not-shown actuator and turns the second arm A2 around the second axis AX2 on the basis of a control signal acquired from the robot control device 30. The second joint is an example of the joint included in the robot. Since the second arm A2 turns around the second axis AX2, the second arm A2 moves in the horizontal direction.

The second arm A2 includes a not-shown up-down moving actuator and a not-shown turning actuator and supports the shaft S. The up-down moving actuator turns, with a timing belt or the like, a ball screw nut provided in the outer circumferential section of a ball screw groove of the shaft S to thereby move (raise and lower) the shaft S in the vertical direction (i.e., the axial direction of the third axis AX3). The turning actuator turns, with a timing belt, a ball spline nut provided in the outer circumferential section of a spline groove of the shaft S to thereby turn the shaft S around the center axis of the shaft S (i.e., the third axis AX3).

The image pickup section 21 is a camera including, for example, a CCD (Charge Coupled Device) or a CMOS (Complementary Metal Oxide Semiconductor), which is an image pickup device that converts condensed light into an electric signal. In this example, the image pickup section 21 is provided in the second arm A2. Therefore, the image pickup section 21 moves according to a movement of the second arm A2. An image pickup region CA, which is a region (a range) in which the image pickup section 21 is capable of picking up an image, changes according to the movement of the second arm A2. The image pickup section 21 may be configured to pick up a still image in the image pickup region CA or may be configured to pick up a moving image in the image pickup region CA. In the following explanation, as an example, the image pickup section 21 is provided in the second arm A2 to pick up an image in the image pickup region CA downward. Note that, instead, the image pickup section 21 may be configured to pick up an image in the image pickup region CA toward another direction. The image pickup section 21 may be provided in another part of the movable section A instead of being provided in the second arm A2.

Each of the actuators and the image pickup section 21 included in the robot 20 is communicatively connected to the robot control device 30 by a cable. Consequently, each of the actuators and the image pickup section 21 performs operation based on a control signal acquired from the robot control device 30. Note that wired communication via the cable is performed according to a standard such as Ethernet (registered trademark) or USB. A part or all of the actuators and the image pickup section 21 may be connected to the robot control device 30 by wireless communication performed according to a communication standard such as Wi-Fi (registered trademark).

The robot control device 30 is a controller that operates the robot 20. The robot control device 30 transmits a control signal to the robot 20 to thereby operate the robot 20. Consequently, the robot control device 30 causes the robot 20 to perform predetermined work. Note that, in this example, the robot control device 30 is separate from the robot 20. However, instead, the robot control device 30 may be incorporated in the robot 20. In this case, the robot control device 30 is incorporated in, for example, the supporting stand B of the robot 20.

Overview of work performed by the robot

An overview of predetermined work performed by the robot 20 is explained.

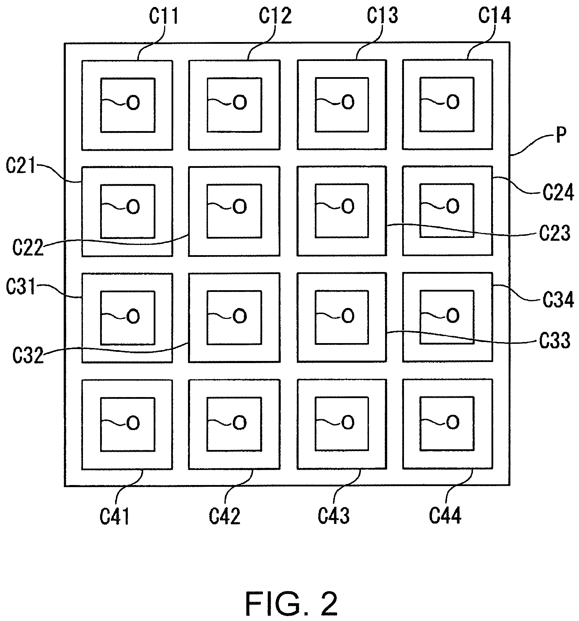

In the example shown in Fig. 1, a pallet P is disposed in a region where the robot 20 is capable of performing work with the end effector E. As shown in Fig. 2, the pallet P is a container including a plurality of cells, which are small regions, capable of storing each of a plurality of target objects O. Fig. 2 is a diagram showing an example of the pallet P.

In this example, the pallet P includes sixteen cells. As shown in Fig. 2, the sixteen cells are arranged in a 4x4 matrix shape in the pallet P. In the following explanation, for convenience of explanation, four cells in a first row in the matrix are referred to as cell C11, cell C12, cell C13, and cell C14 in order from the left. Four cells in a second row in the matrix are referred to as cell C21, cell C22, cell C23, and cell C24 in order from the left. Four cells in a third row in the matrix are referred to as cell C31, cell C32, cell C33, and cell C34 in order from the left. Four cells in a fourth row in the matrix are referred to as cell C41, cell C42, cell C43, and cell C44 in order from the left. In the following explanation, unless it is necessary to distinguish the sixteen cells, the cells are collectively referred to as cells C.

Target objects O are disposed one by one on the inner sides of the respective cells C. Note that two or more target objects O may be disposed on the inner sides of the respective cells C. In the example shown in Fig. 2, the numbers of target objects O disposed on the inner sides of the respective cells C are the same. However, instead, the numbers of target objects O disposed on the inner sides of a part or all of the cells C may be different from one another.

In this example, the robot 20 performs, as predetermined work, work for gripping, one by one, the target objects O disposed in the respective cells C included in the pallet P and placing the gripped target object O in a not-shown material supply region.

Overview of processing in which the robot control device causes the robot to perform the predetermined work

Overview of processing in which the robot control device 30 causes the robot 20 to perform the predetermined work is explained below.

In this example, a position and a posture of the movable section A is represented by a position and a posture of a control point T. The control point T is an imaginary point set in a position associated with the end effector E in advance and is a point that moves together with the end effector E. The position associated with the end effector E in advance is, for example, the position of the center of gravity of the end effector E.

The control point T is, for example, a TCP (Tool Center Point). Note that the control point T may be set in a position of another part of the end effector E or may be set in some position associated with a part different from the end effector E among parts of the movable section A instead of the position associated with the end effector E in advance.

Control point position information, which is information indicating the position of the control point T, and control point posture information, which is information indicating the posture of the control point T, are associated with the control point T. The position is a position in the robot coordinate system RC. The posture is a posture in the robot coordinate system RC. Note that other kinds of information may be associated with the control point T in addition to the control point position information and the control point posture information. When the robot control device 30 designates (determines) the control point position information and the control point posture information, the position and the posture of the control point T are determined. The position and the posture are a position and a posture in the robot coordinate system RC. The robot control device 30 designates the control point position information and the control point posture information. The robot control device 30 operates the movable section A and causes the position of the control point T to coincide with a position indicated by the control point position information designated by the robot control device 30 and causes the posture of the control point T to coincide with a posture indicated by the control point posture information designated by the robot control device 30. In the following explanation, for convenience of explanation, the position indicated by the control point position information designated by the robot control device 30 is referred to as target position and the posture indicated by the control point posture information designated by the robot control device 30 is referred to as target posture. That is, the robot control device 30 designates the control point position information and the control point posture information to thereby operate the movable section A and cause the position and the posture of the control point T to coincide with the target position and the target posture.

In this example, the position of the control point T is represented by a position in the robot coordinate system RC of an origin of the control point coordinate system TC. The posture of the control point T is represented by directions in the robot coordinate system RC of coordinate axes of the control point coordinate system TC. The control point coordinate system TC is a three-dimensional local coordinate system associated with the control point T to move together with the control point T.

The robot control device 30 sets the control point T on the basis of control point setting information input from the use in advance. The control point setting information is, for example, information indicating relative positions and postures of the position and the posture of the center of gravity of the end effector E and the position and the posture of the control point T. Note that, instead, the control point setting information may be information indicating relative positions and postures of some position and some posture associated with the end effector E and the position and the posture of the control point T or may be information indicating relative positions and postures of some position and some posture associated with a part different from the end effector E among parts of the movable section A and the position and the posture of the control point T.

In this example, with each of the cells C included in the pallet P, an image pickup position, which is a position where the image pickup section 21 picks up an image of the target object O disposed on the inner side of the cell C, is associated. Each of image pickup positions is each of positions of the movable section A at the time when the image pickup section 21 picks up an image of the target objects O disposed on the inner sides of the cells C. An image pickup position where the image pickup section 21 picks up an image of the target object O disposed on the inner side of a certain cell C is a position where an optical axis of the image pickup section 21 passes the center of figure of the cell C when the cell C is viewed downward and is a position where the distance from a surface on which the target object O is disposed in the cell to an image pickup lens of the image pickup section 21 is a predetermined distance. The predetermined distance may be any distance as long as the entire cell C is included in the image pickup region CA at the distance when the cell C is viewed downward.

The robot control device 30 causes the predetermined region SW in the image pickup region CA where the image pickup section 21 is capable of picking up an image to coincide with each of regions based on the target object O every time the robot control device 30 moves the movable section A to each of the image pickup positions. The robot control device 30 detects information concerning the target object O on the basis of a picked-up image of the target object O picked up by the image pickup section 21 in the image pickup position and causes the robot 20 to grip the target object O on the basis of the detected information. In other words, the robot control device 30 causes the predetermined region SW to coincide with an image region (or a region smaller than the image region) including the target object O among image regions of a picked-up image picked up by the image pickup section 21 when the robot control device 30 moves the movable section A to a position for picking up an image of each of the plurality of target objects. The robot control device 30 detects information concerning the target object O on the basis of the picked-up image of the target object O picked up by the image pickup section 21 in the position for picking up an image of each of the plurality of target objects O and causes the robot 20 to grip the target object O on the basis of the detected information. Consequently, the robot control device 30 can suppress deterioration in detection accuracy of the information concerning the target object O. As a result, the robot 20 can accurately perform work (in this example, predetermined work) based on the information concerning the target object O. After the robot 20 grips the target object O, the robot control device 30 operates the robot 20 and places the target object O in the not-shown material supply region.

In this example, a region based on a certain target object O refers to a region on the inner side of the cell C in which the target object O is disposed. Note that, in the following explanation, as explained above, the region based on the certain target object O may be an image region including the target object O among image regions of a picked-up image of the target object O picked up by the image pickup section 21. In this case, the image region including the target object O among the image regions of the picked-up image of the target object O picked up by the image pickup section 21 is an image pickup region on the inner side of the cell C among the image regions of the picked-up image. In this example, the predetermined region SW coinciding with the region based on the target object O means that a shape of the predetermined region SW and a shape of the region based on the target object O coincide with each other. Note that the shape of the predetermined region SW is a shape corresponding to the shape of the region based on the target obj ect O. Note that the robot control device 30 may cause the predetermined region SW to coincide with each of regions smaller than the region based on the target object O every time the robot control device 30 moves the movable section A to each of image pickup positions. In this case, the region smaller than the region based on the certain target object O is a region including the entire target object O at the time when the target object O is viewed downward in a region on the inner side of the cell C in which at least the target object O is disposed. The region based on the certain target object O may be another region based on the target object O instead of the region on the inner side of the cell C in which the target object O is disposed.

In this example, the predetermined region SW is a region set to include at least a part of the image pickup device on the image pickup device of the image pickup section 21. In other words, the predetermined region SW is a region set to include at least a part on a picked-up image picked up by the image pickup section 21. Specifically, the predetermined region SW is, for example, a region (a search window) where the robot control device 30 perform predetermined processing among regions on the picked-up image picked up by the image pickup section 21. Note that, instead of the region, the predetermined region SW may be another region set to include a part of the image pickup device on the image pickup device.

In this example, the information concerning the target object O is the position and the posture of the target object O. Instead of the position and the posture of the target object O, the information concerning the target object O may be another kind of information concerning the target object O such as information indicating a state of the surface of the target object O, information indicating the shape of the target object O, or information indicating whether the target object is a non-defective product or a defective product. For example, when information concerning a certain target object O is information indicating whether the target object O is a non-defective product or a defective product, the robot control device 30 causes the robot 20 to grip the target object O when the target object O is a non-defective product. In this case, a position and a posture of the target object O are stored in the robot control device 30 in advance.

The robot control device 30 causes the robot 20 to grip the target object O on the basis of the detected information concerning the target object O (in this example, the position and the posture of the target object O). The robot control device 30 operates the robot 20 and places the target obj ect O in the not-shown material supply region. Note that information indicating the position of the material supply region is stored in the robot control device 30 in advance.

Hardware configuration of the robot control device

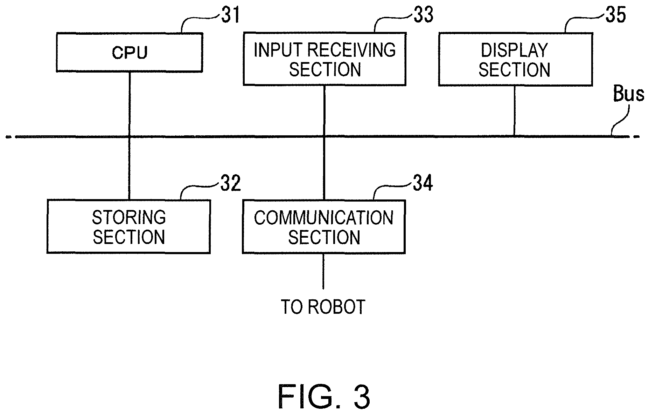

A hardware configuration of the robot control device 30 is explained below with reference to Fig. 3. Fig. 3 is a diagram showing an example of the hardware configuration of the robot control device 30. The robot control device 30 includes, for example, a CPU (Central Processing Unit) 31, a storing section 32, an input receiving section 33, a communication section 34, and a display section 35. These components are communicatively connected to one another via a bus Bus. The robot control device 30 performs communication with the robot 20 via the communication section 34.

The CPU 31 executes various computer programs stored in the storing section 32.

The storing section 32 includes, for example, a HDD (Hard Disk Drive) or an SSD (Solid State Drive), an EEPROM (Electrically Erasable Programmable Read-Only Memory), a ROM (Read-Only Memory), or a RAM (Random Access Memory). Note that the storing section 32 may be, instead of a storing section incorporated in the robot control device 30, an external storage device connected by, for example, a digital input/output port such as a USB. The storing section 32 stores various kinds of information and images to be processed by the robot control device 30, computer programs, and the like.

The input receiving section 33 is a teaching pendant including a keyboard, a mouse, or a touch pad or another input device. Note that the input receiving section 33 may be configured integrally with the display section 35 as a touch panel.

The communication section 34 includes, for example, a digital input/output port such as a USB or an Ethernet (registered trademark) port.

The display section 35 is, for example, a liquid crystal display panel or an organic EL (Electro Luminescence) display panel.

Functional configuration of the robot control device

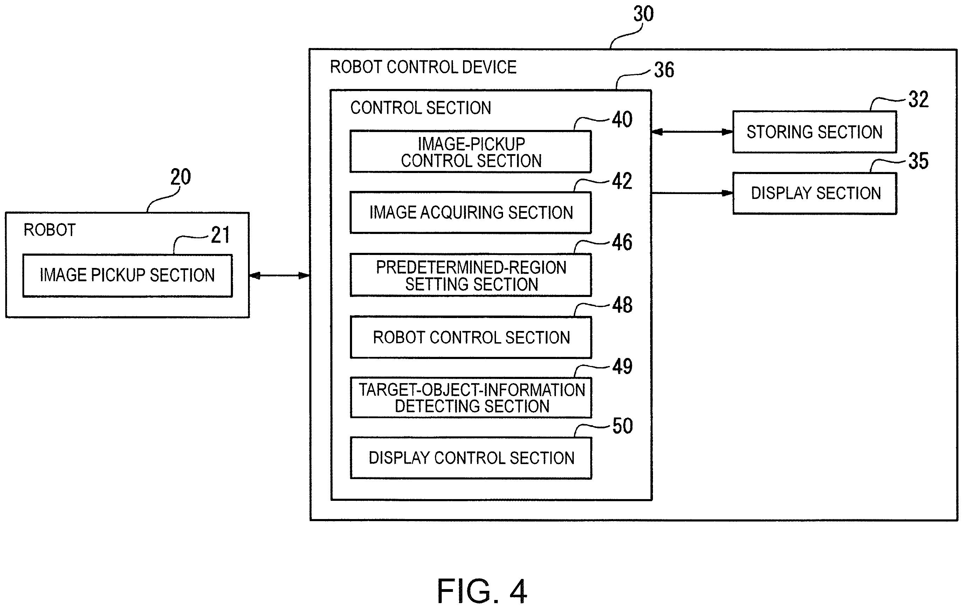

A functional configuration of the robot control device 30 is explained with reference to Fig. 4. Fig. 4 is a diagram showing an example of a functional configuration of the robot control device 30. The robot control device 30 includes the storing section 32, the display section 35, and a control section 36.

The control section 36 controls the entire robot control device 30. The control section 36 includes an image-pickup control section 40, an image acquiring section 42, a predetermined-region setting section 46, a robot control section 48, a target-object-information detecting section 49, and a display control section50. These functional sections included in the control section 36 are realized by, for example, the CPU 31 executing various computer programs stored in the storing section 32. A part or all of the functional sections may be hardware functional sections such as an LSI (Large Scale Integration) and an ASIC (Application Specific Integrated Circuit).

The image-pickup control section 40 causes the image pickup section 21 to pick up an image in the image pickup region CA where the image pickup section 21 is capable of picking up an image.

The image acquiring section 42 acquires the picked-up image picked up by the image pickup section 21 from the image pickup section 21.

The predetermined-region setting section 46 sets the predetermined region SW on the image pickup device of the image pickup section 21 according to a first angle, which is an angle of each of joints (i.e., in this example, a first joint and a second joint) included in the robot 20.

The robot control section 48 operates the robot 20.

The target-object-information detecting section 49 detects, on the basis of the picked-up image acquired from the image pickup section 21 by the image acquiring section 42, information concerning the target object O included in the picked-up image. In this example, the target-object-information detecting section 49 detects (calculates) a position and a posture of the target object O as the information on the basis of the picked-up image.

The display control section 50 generates various screens displayed on the display section 35. The display control section 50 causes the display section 35 to display the generated screens.

Initial setting for performing processing in which the robot control device causes the robot to perform the predetermined work

Initial setting for performing processing in which the robot control device 30 causes the robot 20 to perform the predetermined work is explained below.

The robot control device 30 causes, on the basis of operation received from the user, the position and the posture of the control point T to coincide with an initial position and an initial posture desired by the user. In this example, the initial position and the initial posture desired by the user refer to a position with which the robot control device 30 causes the position of the control point T to coincide first and a posture with which the robot control device 30 causes the posture of the control point T to coincide first in the position when the robot 20 performs the predetermined work. In the following explanation, as an example, the initial position and the initial posture desired by the user are a position and a posture of the control point T at the time when the predetermined region SW in the image pickup region CA where the image pickup section 21 is capable of picking up an image and the cell C desired by the user among the cells C included in the pallet P coincide with each other. In the following explanation, the cell C desired by the user is the cell C24 shown in Fig. 2. Note that the initial position and the initial posture desired by the user may be another position and another posture instead of the position and the posture of the control point T at the time when the predetermined region SW and the cell C24 coincide with each other. The cell C desired by the user may be another cell C instead of the cell C24.

When causing the position and the posture of the control point T to coincide with the initial position and the initial posture desired by the user, the predetermined-region setting section 46 sets the predetermined region SW in a default region, which is a predetermined range on the image pickup device of the image pickup section 21. For example, the predetermined-region setting section 46 is configured to specify the default region on the basis of operation received from the user in advance. However, instead, the predetermined-region setting section 46 may be configured to specify the default region according to another method of, for example, specifying, as the default region, a region on the inner side of the cell C detected on the basis of the picked-up image picked up by the image pickup section 21. Note that, when causing the position and the posture of the control point T to coincide with the initial position and the initial posture desired by the user, the predetermined-region setting section 46 may set the predetermined region SW on the image pickup device of the image pickup section 21 on the basis of operation received from the user.

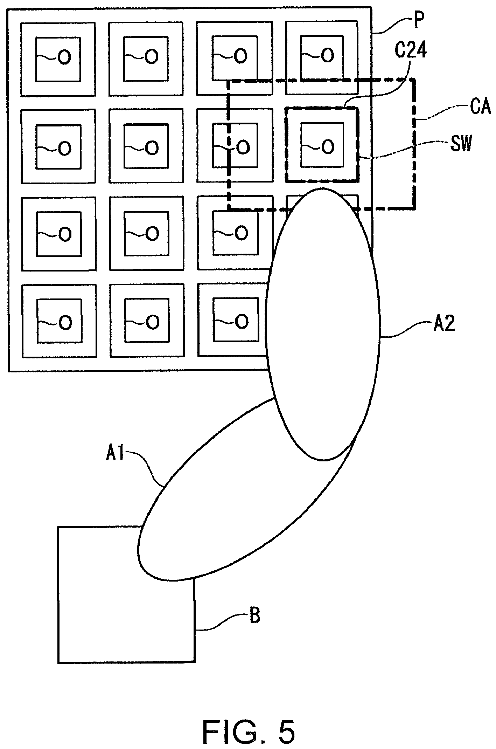

Fig. 5 is a diagram showing an example of an appearance of the image pickup region CA and the predetermined region SW in a state in which the position and the posture of the control point T coincide with an initial position and posture X11 and the robot 20 in the state. In Fig. 5, a range included in the image pickup region CA in the state and a range included in the predetermined region SW in the image pickup region CA are represented by alternate long and two short dashes lines. As shown in Fig. 5, in the state, the predetermined region SW and a region on the inner side of the cell C24 coincide with each other.

In the state shown in Fig. 5, the user teaches the robot control device 30 the present position and the present posture of the control point T, that is, the initial position and posture X11. In other words, in the state, the robot control device 30 causes, on the basis of operation received from the user, the storing section 32 to store initial position and posture information indicating the initial position and posture X11. At this point, the robot control device 30 causes the storing section 32 to store information indicating the first angle, which is the angle of each of the joints (i.e., in this example, the first joint and the second joint) included in the movable section A as initial angle information in association with the initial position and posture X11.

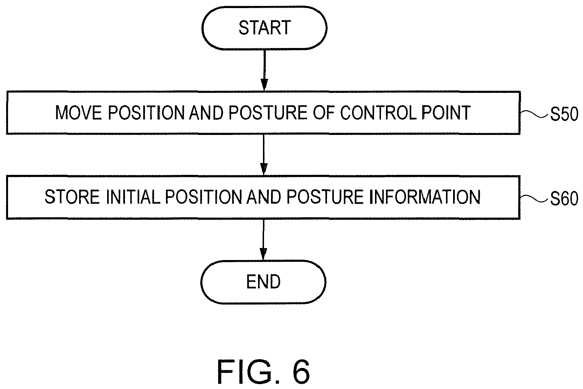

Fig. 6 is a diagram showing an example of a flow of processing in which the robot control device 30 causes the storing section 32 to store the initial position and posture information (i.e., processing of initial setting).

The robot control section 48 operates the robot 20 on the basis of operation received from the user and causes the position and the posture of the control point T to coincide with the initial position and posture X11 (step S50). A method in which the user causes the position and the posture of the control point T to coincide with the initial position and posture X11 may be a known method such as jog operation by a teaching pendant or may be a method developed from the known method. Processing in step S50 is explained.

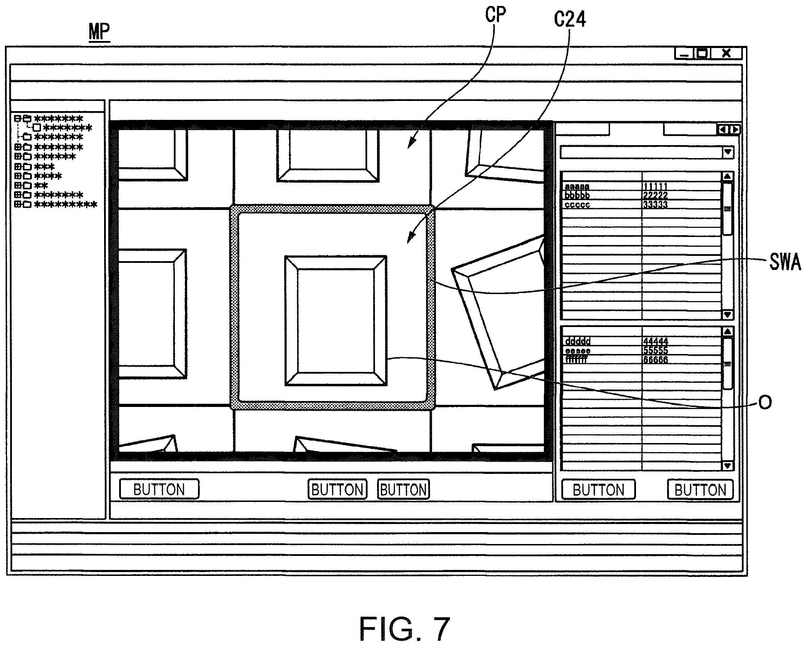

In step S50, for example, the image-pickup control section 40 causes the image pickup section 21 to pick up an image in the image pickup region CA every time a predetermined time elapses. The display control section 50 causes the display section 35 to display a picked-up image picked up by the image pickup section 21. At this point, the display control section 50 superimposes, on the picked-up image, a frame indicating a range included in the predetermined region SW set on the image pickup device of the image pickup section 21 by the predetermined-region setting section 46 in the picked-up image displayed on the display section 35. Consequently, the user can determine whether the predetermined region SW and the region on the inner side of the cell C coincide with each other by, while viewing the picked-up image and the frame displayed on the display section 35, determining whether a contour of a region on the inner side of the cell C desired by the user (in this example, the cell C24) and the frame coincide with each other. The predetermined time is, for example, 1/60 second. Note that the predetermined time may be another time instead of 1/60 second. Fig. 7 is a diagram showing an example of the picked-up image displayed on the display section 35 and the frame indicating the range included in the predetermined region SW set on the image pickup device of the image pickup section 21 in the picked-up image.

A screen MP shown in Fig. 7 is a screen generated by the display control section 50 and is a screen for displaying a picked-up image CP picked up by the image pickup section 21 on the display section 35. The picked-up image CP shown in Fig. 7 is an example of the picked-up image displayed on the display section 35. A frame SWA shown in Fig. 7 is an example of a frame indicating a range included in the predetermined region set on the image pickup device of the image pickup section 21 in the picked-up image CP. In the example shown in Fig. 7, a contour of a region on the inner side of the cell C24 included in the picked-up image CP and the frame SWA coincide with each other. As shown in Fig. 7, the initial position and posture X11 is a position and a posture of the control point T in a state in which the contour of the region on the inner side of the cell C24 included in the picked-up image CP and the frame SWA coincide with each other. That is, in step S50, the user moves (changes) the position and the posture of the control point T while viewing the screen MP displayed on the display section 35 and causes the contour of the region on the inner side of the cell C24 and the frame SWA to coincide with each other.

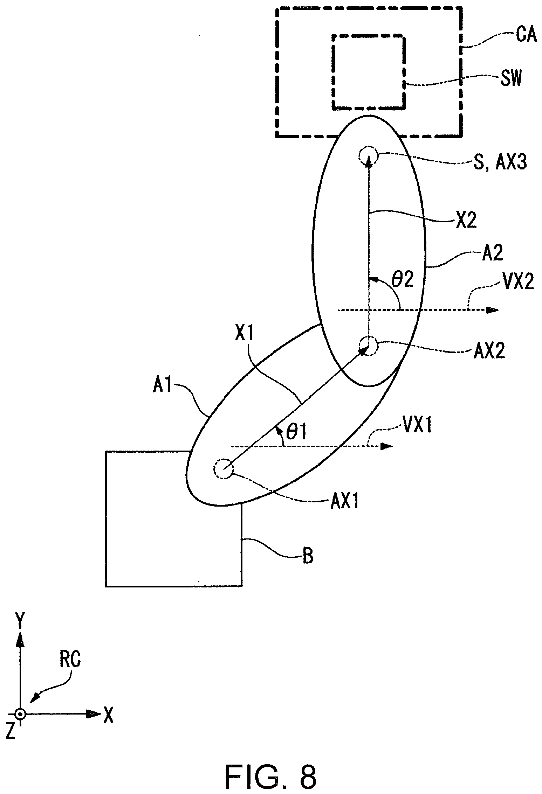

After the processing in step S50 is performed, the robot control section 48 causes, on the basis of operation received from the user, the storing section 32 to store, as the initial position and posture information, information indicating the present position and the present posture of the control point T. At this point, the robot control section 48 causes the storing section 32 to store information indicating the first angle of each of the joints currently included in the robot 20, that is, the first joint and the second joint as initial angle information in association with the initial position and posture information (step S60) and ends the processing. Processing in step S60 is explained with reference to Fig. 8.

Fig. 8 is a diagram for explaining the processing in step S60. The supporting stand B, the first arm A1, and the second arm A2 shown in Fig. 8 are respectively the supporting stand B, the first arm A1, and the second arm A2 in the state in which the position and the posture of the control point T coincide with the initial position and posture X11. The first angle of a certain joint among the joints included in the robot 20 is an angle with respect to a first reference direction associated with the joint. That is, the first reference direction is associated with each of the first joint and the second joint included in the robot 20. In this example, the first reference direction is a positive direction of an X axis in the robot coordinate system RC shown in Fig. 8. Note that the first reference direction may be another direction instead of the positive direction of the X axis. The first angle of the certain joint among the joints included in the robot 20 is an angle of the joint at the time when a clockwise direction is set as a positive direction and a counterclockwise direction is set as a negative direction when the robot 20 is viewed downward. In this example, the first angle of the first joint is an angle with respect to the first reference direction of a straight line (a straight line X1 in Fig. 8) extending from the first axis AX1, which is a turning axis of the first joint, to the second axis AX2, which is a turning axis of the second joint. That is, in the example shown in Fig. 8, the first angle of the first joint is a first angle $\theta 1$. An auxiliary line VX1 shown in Fig. 8 is an auxiliary line for indicating the first reference direction. In this example, the first angle of the second joint is an angle with respect to the first reference direction of a straight line (a straight line X2 in Fig. 8) extending from the second axis AX2, which is a turning axis of the second joint, to the center axis of the shaft S (i.e., the third axis AX3). That is, in the example shown in Fig. 8, the first angle of the second joint is a first angle $\theta 2$. An auxiliary line VX2 shown in Fig. 8 is an auxiliary line for indicating the first reference direction.

That is, the robot control section 48 causes, on the basis of operation received from the user, the storing section 32 to store information indicating each of the first angle $\theta 1$ and the first angle $\theta 2$ as initial angle information in association with the initial position and posture information. For example, the robot control section 48 may receive the operation from a GUI (Graphical User Interface) included in the screen MP shown in Fig. 7 or the robot control section 48 may receive the operation from another device such as a teaching pendant.

In this way, the robot control device 30 causes the storing section 32 to store the initial position and posture information associated with the initial angle information as initial setting for performing the processing in which the robot control device 30 causes the robot 20 to perform the predetermined work. The robot control device 30 can cause, according to the initial position and posture information stored in the storing section 32 and processing explained below, the predetermined region SW in the image pickup region CA where the image pickup section 21 is capable of picking up an image to coincide with each of regions based on the target object O every time the robot control device 30 moves the movable section A to each of the image pickup positions.

Processing by the robot control device based on the initial position and posture information

Processing by the robot control device 30 based on the initial position and posture information stored in the storing section 32 by the processing of the flowchart shown in Fig. 6 is explained below.

The robot control device 30 reads out, from the storing section 32, the initial position and posture information stored in the storing section 32 in advance. The robot control device 30 reads out, from the storing section 32, image pickup position information stored in the storing section 32 in advance. The image pickup position information is information indicating the image pickup positions. The image pickup position information is information indicating relative positions of an initial position to image pickup positions in the initial position and posture X11 indicated by the initial position and posture information.

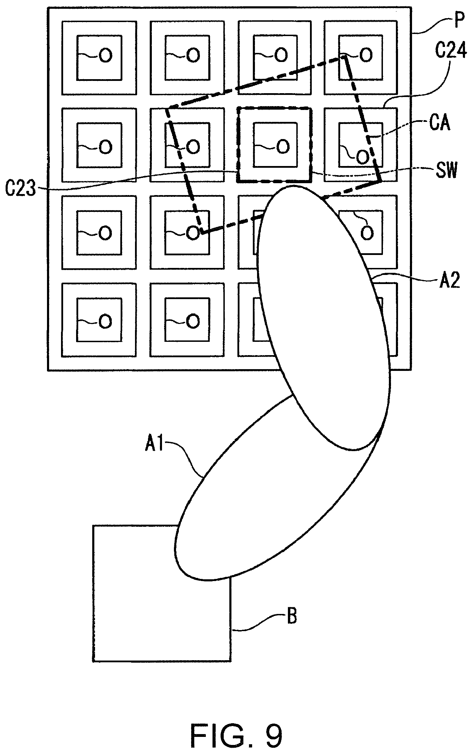

The robot control device 30 operates the robot 20, selects, one by one, a plurality of image pickup positions indicated by the read-out image pickup position information, and causes, on the basis of the initial position and posture X11 indicated by the read-out initial position and posture information, the selected image pickup position and the position of the control point T to coincide with each other. As shown in Fig. 9, an example is explained in which the robot control device 30 causes the position of the control point T to coincide with an image pickup position where the image pickup section 21 picks up an image of the cell C23. Fig. 9 is a diagram showing an example of an appearance of the image pickup region CA and the predetermined region SW in a state in which the position of the control point T coincides with the image pickup position where the image pickup section 21 picks up an image of the cell C23 and the robot 20 in the state. In Fig. 9, a range included in the image pickup region CA in the state and a range included in the predetermined region SW in the image pickup region CA are represented by alternate long and two short dashes lines.

As shown in Fig. 9, in the state, the predetermined region SW and the region on the inner side of the cell C23 coincide with each other. This is a result of the robot control device 30 changing a relative angle (posture) of the predetermined region SW with respect to the image pickup region CA on the image pickup device of the image pickup section 21 on the basis of the first angle indicated by the initial angle information associated with the initial position and posture information read out from the storing section 32. The robot control device 30 changes the angle in this way to thereby cause the predetermined region SW to coincide with each of the regions based on the target object O every time the robot control device 30 moves the movable section A to each of a plurality of image pickup positions indicated by the image pickup position information.

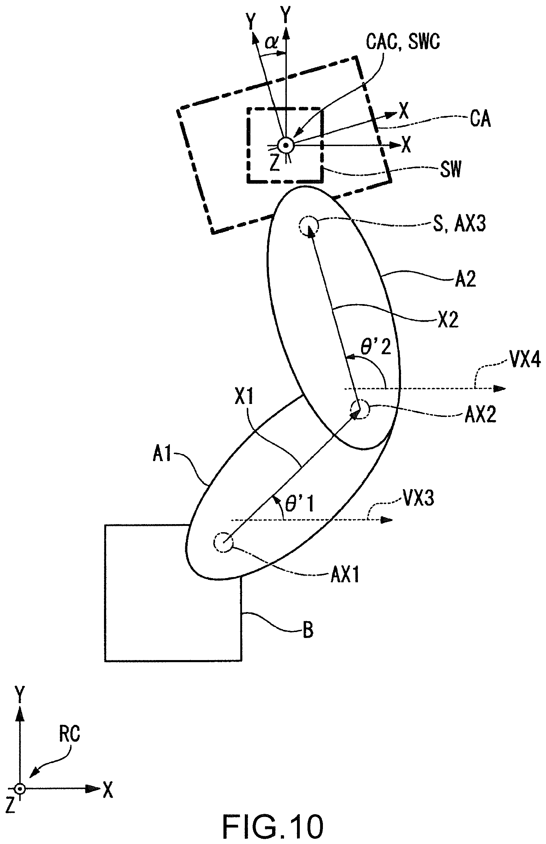

In the following explanation, a method is explained in which the robot control device 30 changes a relative angle of the predetermined region SW with respect to the image pickup region CA on the image pickup device of the image pickup section 21 on the basis of the first angle indicated by the initial angle information. Fig. 10 is a diagram illustrating the first angles of the first joint and the second joint in the state shown in Fig. 9 and the relative angle of the predetermined region SW with respect to the image pickup region CA.

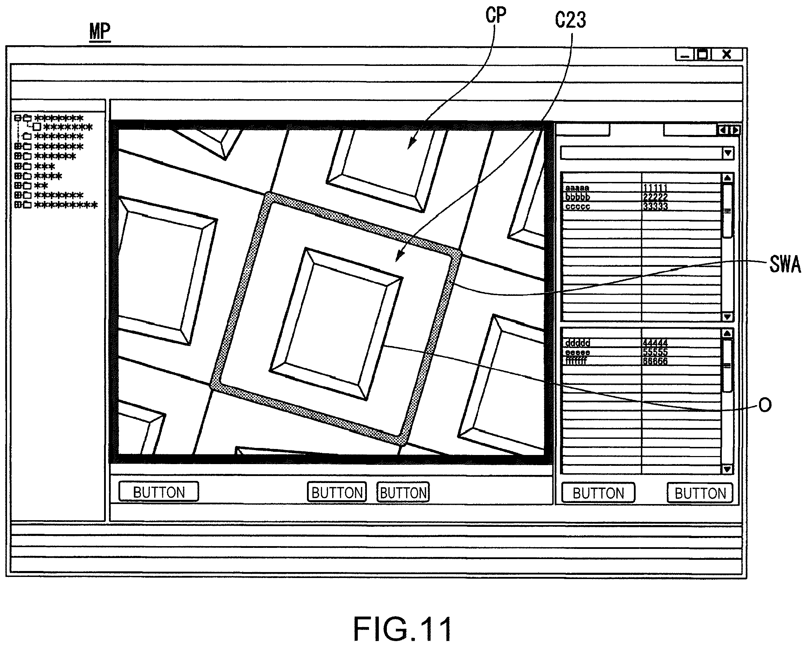

The supporting stand B, the first arm A1, and the second arm A2 shown in Fig. 10 are respectively the supporting stand B, the first arm A1, and the second arm A2 in the state in which the position of the control point T coincides with the image pickup position where the image pickup section 21 picks up an image of the cell C23. In the example shown in Fig. 10, the first angle of the first joint is a first angle $\theta'1$. An auxiliary line VX3 shown in Fig. 10 is an auxiliary line for indicating the first reference direction. The first angle of the second joint is a first angle $\theta'2$. An auxiliary line VX4 shown in Fig. 11 is an auxiliary line for indicating the first reference direction.

In this example, an image-pickup-section coordinate system CAC moving together with the image pickup section 21 is associated with the image pickup section 21. A positive direction of a Y axis in the image-pickup-section coordinate system CAC coincides with the direction of the straight line X2. In the following explanation, for convenience of explanation, the positive direction is referred to as second reference direction. That is, the second reference direction is associated with the image pickup section 21. The second reference direction moves together with the image pickup section 21. Therefore, in other words, the second reference direction is associated with the image pickup region CA.

A predetermined region coordinate system SWC that moves together with a point on the image pickup device of the image pickup section 21, that is, a point associated with the predetermined region SW on the image pickup device is associated with the predetermined region SW. In this example, since the shape of the predetermined region SW is a rectangular shape, the point is associated with the position of the center of figure of the predetermined region SW among positions on the image pickup device. Note that the point may be associated with another position associated with the predetermined region SW among the positions on the image pickup device. The positive direction of the Y axis in the predetermined region coordinate system SWC coincides with the positive direction of the Y axis in the image-pickup-section coordinate system CAC in a state in which the position and the posture of the control point T coincide with the initial position and posture X11. In the following explanation, for convenience of explanation, the positive direction of the Y axis in the predetermined region coordinate system SWC is referred to as third reference direction. That is, the third reference direction is associated with the predetermined region SW.

The third reference direction is directed to a direction based on the first angles of the first joint and the second joint when a state in which the position and the posture of the control point T coincide with the initial position and posture X11 changes to a state in which the position and the posture of the control point T do not coincide the initial position and posture X11. In the following explanation, for convenience of explanation, an angle between the second reference position and the third reference position is referred to as second angle. A second angle $\alpha$ shown in Fig. 10 is an example of the second angle.

The second angle $\alpha$ involved in the operation of the movable section A is calculated according to the following Expression (1) on the basis of each of the first angle $\theta'1$ and the first angle $\theta'2$ in the state shown in Fig. 10 and each of the first angle $\theta1$ and the first angle $\theta2$ indicated by the initial angle information.

$$\alpha = (\theta1 + \theta2) - (\theta'1 + \theta'2) \qquad (1)$$

The predetermined-region setting section 46 calculates the second angle $\alpha$ according to the above Expression (1) on the basis of each of the first angle $\theta'1$ and the first angle $\theta'2$ in the state shown in Fig. 10 and each of the first angle $\theta1$ and the first angle $\theta2$ indicated by the initial angle information. The predetermined-region setting section 46 sets, on the basis of the calculated second angle $\alpha$, as the predetermined region SW, a region obtained by rotating the default region by the second angle $\alpha$ around the center of figure of the default region (i.e., the center of figure of the predetermined region SW) on the image pickup device of the image pickup section 21. Consequently, the robot control device 30 does not change (retains) the third reference direction in a change of the second angle $\alpha$.

The predetermined-region setting section 46 changes the second angle $\alpha$ such that the third reference direction does not change. Consequently, since the contour of the picked-up image CP does not move as shown in Fig. 11 on the screen MP displayed on the display section 35, an angle of the frame SWA indicating the range included in the predetermined region SW with respect to the contour changes. Fig. 11 is a diagram showing another example of the picked-up image displayed on the display section 35 and the frame indicating the range included in the predetermined region SW set on the image pickup device of the image pickup section 21 in the picked-up image. As explained above, in the example shown in Fig. 11, the contour of the region on the inner side of the cell C23 included in the picked-up image CP and the frame SWA coincide with each other. That is, the robot control device 30 changes the second angle $\alpha$ to thereby cause the predetermined region SW to coincide with each of the regions based on the target object O every time the robot control device 30 moves the movable section A to each of the plurality of image pickup positions indicated by the image pickup position information. By viewing the picked-up image CP and the frame SWA displayed on the display section 35, the user can confirm that each of the regions based on the target object O and the predetermined region SW coincide with each other every time the movable section A moves to each of the plurality of image pickup positions indicated by the image pickup position information.

Note that the robot control device 30 may be configured to change the third reference direction according to the change of the second angle $\alpha$. In this case, the second angle $\alpha$ is calculated on the basis of Expression (2) described below.

$$\alpha = k((\theta1 + \theta2) - (\theta'1 + \theta'2)) \qquad (2)$$

In the expression, k is a predetermined gain. That is, the robot control device 30 changes the second angle $\alpha$ according to the first angle $\theta1$ and the first angle $\theta2$ and the gain. Note that k may be a constant or may be a function of at least one of the first angle $\theta1$ and the first angle $\theta2$. A configuration for calculating the second angle $\alpha$ using the above expression (2) is applied, for example, when the cells C included in the pallet P are radially arranged from the center of the pallet P.

Processing in which the robot control device causes the robot to perform the predetermined work

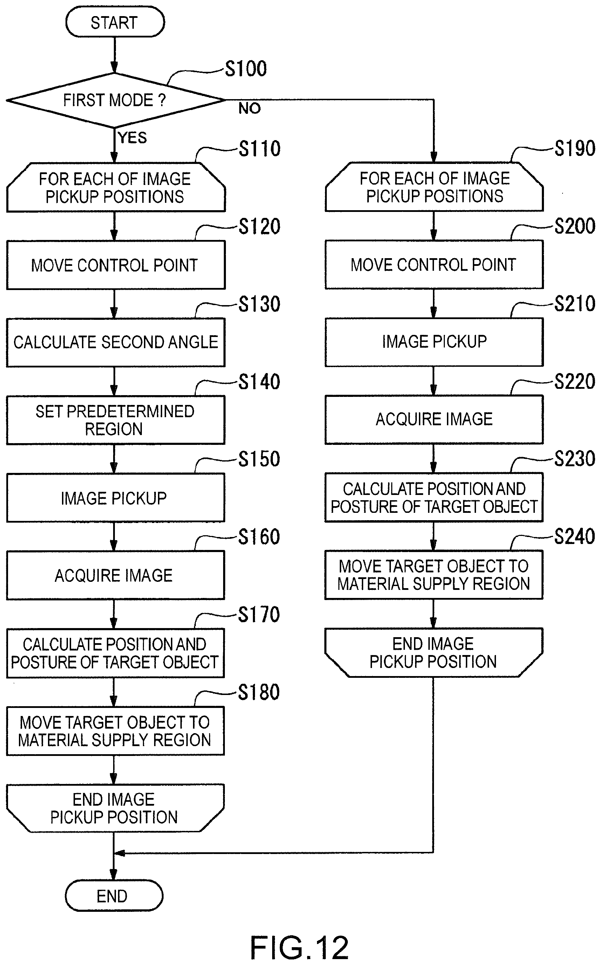

Processing in which the robot control device 30 causes the robot 20 to perform the predetermined work is explained below. Fig. 12 is a diagram showing an example of a flow of the processing in which the robot control device 30 causes the robot 20 to perform the predetermined work.

The robot control section 48 determines whether a present operation mode of the robot control device 30 is a first mode (step S100). Processing in step S100 is explained. The operation mode of the robot control device 30 can be switched to either one of two modes, that is, the first mode and the second mode. That is, the robot 20 is capable of operating in either one of the first mode and the second mode.

In this example, the first mode is an operation mode for changing the second angle $\alpha$ on the basis of the first angle $\theta1$ and the first angle $\theta2$. In this example, the second mode is an operation mode for not changing the second angle $\alpha$ from 0°. That is, the second mode is an operation mode in which the predetermined region SW is retained as the default region.

For example, the robot control section 48 receives, from the user, operation for switching the operation mode from the screen MP shown in Fig. 7 and switches the operation mode to either one of the first mode and the second mode on the basis of the received operation. Note that the robot control section 48 may be configured to switch the operation mode to either one of the first mode and the second mode according to another method. The operation mode of the robot control device 30 may include an operation mode other than the first mode and the second mode.

When determining that the present operation mode of the robot control device 30 is the first mode (YES in step S100), the robot control section 48 reads out, from the storing section 32, the initial position and posture information and the image pickup position information stored in the storing section 32 in advance. The robot control section 48 selects, one by one, the plurality of image pickup positions indicated by the read-out image pickup position information and repeatedly performs processing in steps S120 to S180 for each of the selected image pickup positions (step S110).

After the image pickup position is selected in step S110, the robot control section 48 operates the movable section A and causes, on the basis of the initial position and posture information read out in step S110, the image pickup position selected in step S110 and the position of the control point T to coincide with each other (step S120) .

Subsequently, the predetermined-region setting section 46 acquires information indicating each of the present first angle $\theta1$ of the first joint and the present first angle $\theta2$ of the second joint from encoders of the actuator included in the first joint and the actuator included in the second joint. The predetermined-region setting section 46 calculates the second angle $\alpha$ according to the above Expression (1) on the basis of the first angle $\theta1$ and the first angle $\theta2$ indicated by the acquired information and the first angle $\theta'1$ and the first angle $\theta'2$ indicated by the initial angle information associated with the initial position and posture information read out in step S110 (step S130).

Subsequently, the predetermined-region setting section 46 sets the predetermined region SW on the image pickup device of the image pickup section 21 on the basis of the second angle $\alpha$ calculated in step S130 (step S140). Subsequently, the image-pickup control section 40 causes the image pickup section 21 to pick up an image in the image pickup region CA (step S150). Subsequently, the image acquiring section 42 acquires, from the image pickup section 21, the picked-up image picked up by the image pickup section 21 in step S150 (step S160).

Subsequently, the target-object-information detecting section 49 detects (calculates), on the basis of the picked-up image acquired from the image pickup section 21 by the image acquiring section 42 in step S160, a position and a posture of the target object O included in the picked-up image (step S170). The target-object-information detecting section 49 may be configured to detect the position and the posture of the target object O according to a known method or may be configured to detect the position and the posture of the target object O according to a method to be developed in future.

Subsequently, the robot control section 48 operates the movable section A on the basis of the position and the posture of the target object O detected in step S170 and causes the robot 20 to grip the target object O. The robot control section 48 operates the movable section A and causes the robot 20 to place the target object O gripped by the robot 20 in the not-shown material supply region (step S180). Thereafter, when unselected image pickup positions are present in step S110, the robot control section 48 transitions to step S110 and selects one image pickup position out of the unselected image pickup positions. On the other hand, when unselected image pickup positions are absent in step S110, the robot control section 48 ends the processing.

On the other hand, when determining in step S100 that the present operation mode of the robot control device 30 is not the first mode (NO in step S100), the robot control section 48 determines that the operation mode of the robot control device 30 is the second mode and reads out, from the storing section 32, the initial position and posture information and the image pickup position information stored in the storing section 32 in advance. The robot control section 48 selects, one by one, the plurality of image pickup positions indicated by the read-out image pickup position information and repeatedly performs processing in steps S200 to S240 for each of the selected image pickup positions (step S190).

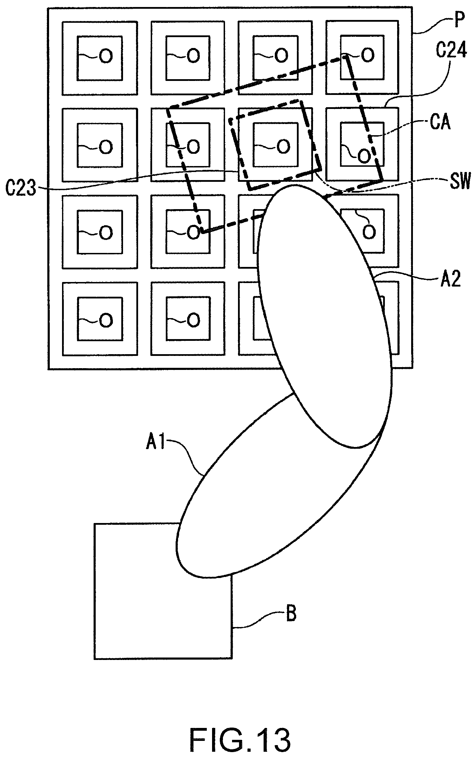

After the image pickup position is selected in step S190, the robot control section 48 operates the movable section A and causes, on the basis of the initial position and the posture information read out in step S190, the image pickup position selected in step S190 and the position of the control point T to coincide with each other (step S200). Processing in step S200 is explained with reference to Fig. 13.

In the following explanation, an example is explained in which, in step S200, the robot control section 48 causes the position of the control point T to coincide with the image pickup position where the image pickup section 21 picks up an image of the cell C23. Fig. 13 is a diagram showing an example of an appearance of the image pickup region CA and the predetermined region SW in a state in which the position and the posture of the control point T coincide with the image pickup position where the image pickup section 21 picks up an image of the cell C23 and the robot 20 in the state. In Fig. 13, a range included in the image pickup region CA in the state and a range included in the predetermined region SW in the image pickup region CA are represented by alternate long and two short dashes lines. As shown in Fig. 13, in the state, the predetermined region SW and the region on the inner side of the cell C23 do not coincide with each other. This is because, since the operation mode of the robot control device 30 is the second mode, the predetermined region SW is retained as the default region.

After the processing in step S200 is performed, the image-pickup control section 40 causes the image pickup section 21 to pick up an image in the image pickup region CA (step S210). Subsequently, the image acquiring section 42 acquires, from the image pickup section 21, the picked-up image picked up by the image pickup section 21 in step S210 (step S220).

Subsequently, the target-object-information detecting section 49 detects (calculates), on the basis of the picked-up image acquired from the image pickup section 21 by the image acquiring section 42 in step S220, a position and a posture of the target object O included in the picked-up image (step S230). The target-object-information detecting section 49 may be configured to detect the position and the posture of the target object O according to a known method or may be configured to detect the position and the posture of the target object O according to a method to be developed in future.

Subsequently, the robot control section 48 operates the movable section A on the basis of the position and the posture of the target object O detected in step S230 and causes the robot 20 to grip the target object O. The robot control section 48 operates the movable section A and causes the robot 20 to place the target object O gripped by the robot 20 in the not-shown material supply region (step S240). Thereafter, when unselected image pickup positions are present in step S190, the robot control section 48 transitions to step S190 and selects one image pickup position out of the unselected image pickup positions. On the other hand, when unselected image pickup positions are absent in step S190, the robot control section 48 ends the processing.

As explained above, in the robot 20 in the embodiment, the predetermined region (in this example, the predetermined region SW) in the image pickup region (in this example, the image pickup region CA) where the image pickup section (in this example, the image pickup section 21) provided in the arm (in this example, the movable section A) is capable of picking up an image coincides with, among image regions of a picked-up image picked up by the image pickup section when the arm is moved to the position for picking up an image of each of a plurality of target objects (in this example, the target objects O), the image region including the target object (in this example, the image region on the inner side of the cell C among the image regions of the picked-up image) or a region smaller than the image region. The robot 20 detects information concerning the target object (in this example, the position and the posture of the target object O) on the basis of the picked-up image of the target object picked up by the image pickup section in the position for picking up an image of each of the plurality of target objects and grips the target object on the basis of the detected information. Consequently, the robot 20 can accurately perform work based on the information concerning the target object.

In the robot 20, the predetermined region in the image pickup region where the image pickup section provided in the arm is capable of picking up an image coincides with, among image regions of a picked-up image picked up by the image pickup section, the image region on the inner side of the cells (in this example, the cells C) in the pallet (in this example, the pallet P) or a region smaller than the image region. The robot 20 detects information concerning the target object on the basis of the picked-up image of the target object picked up by the image pickup section in the position for picking up an image of each of the plurality of target objects and grips the target object on the basis of the detected information. Consequently, the robot 20 can accurately perform work based on the information concerning the target object disposed in each of the cells in the pallet.

In the robot 20, the second angle (in this example, the second angle $\alpha$), which is the angle of the predetermined region, changes according to a change of the first angle (in this example, the first angle $\theta 1$ and the first angle $\theta 2$), which is the angle of each of the joints (in this example, the first joint and the second joint) included in the robot 20. Consequently, the robot 20 can accurately perform work based on the information concerning the target object on the basis of the first angle, which is the angle of each of the joints included in the robot 20.

In the robot 20, the third reference direction does not change in the change of the second angle. Consequently, the robot 20 can accurately perform work based on the information concerning the target object on the basis of the first angle, which is the angle with respect to the first reference direction associated with each of the joints included in the robot and is the angle of each of the joints.

The robot 20 can accurately perform work based on the information concerning the target object on the basis of the first angle, which is the angle with respect to the first reference direction associated with each of the joints included in the robot 20 and is the angle of each of the joints, and the gain.

The robot 20 is capable of operating according to the two modes, that is, the first mode in which the second angle changes according to the first angle and the second mode in which the second angle does not change according to the first angle. Consequently, the robot 20 can accurately perform work based on the information concerning the target object according to an operation mode desired by the user.

In the robot 20, the shape of the predetermined region is the shape corresponding to the shape of the image region including the target object or the region smaller than the image region. Consequently, the robot 20 can accurately perform work based on the information concerning the target object on the basis of the predetermined region having the shape corresponding to the shape of the region including the target object or the region smaller than the region.

In the robot 20, when the picked-up image is displayed on the display section, the predetermined region is displayed on the display section together with the picked-up image. Consequently, the robot 20 can cause the user to confirm whether the target object is included in the predetermined region.

The robot control device 30 causes the predetermined region in the image pickup region where the image pickup section provided in the arm is capable of picking up an image to coincide with, among image regions of a picked-up image picked up by the image pickup section when the arm is moved to the position for picking up an image of each of a plurality of target objects, the image region including the target object or a region smaller than the image region, detects information concerning the target object on the basis of the picked-up image of the target object picked up by the image pickup section in the position for picking up an image of each of the plurality of target objects, and causes the robot to grip the target object on the basis of the detected information. Consequently, the robot control device 30 can suppress deterioration in detection accuracy of the information concerning the target object.

The embodiment of the invention is explained in detail above with reference to the drawings. However, a specific configuration is not limited to the embodiment and may be, for example, changed, substituted, or deleted without departing from the spirit of the invention.

It is also possible to record, in a computer-readable recording medium, a computer program for realizing functions of any components in the devices (e.g., the robot control device 30) explained above, cause a computer system to read the computer program, and execute the computer program. Note that the "computer system" includes an OS (an operating system) and hardware such as peripheral devices. The "computer-readable recording medium" refers to a portable medium such as a flexible disk, a magneto-optical disk, a ROM, or a CD (Compact Disk)-ROM or a storage device such as a hard disk incorporated in the computer system. Further, the "computer-readable recording medium" includes a recording medium that stores a computer program for a fixed time such as a volatile memory (a RAM) inside a computer system functioning as a server or a client when a computer program is transmitted via a network such as the Internet or a communication line such as a telephone line.

The computer program may be transmitted from a computer system, which stores the computer program in a storage device or the like, to another computer system via a transmission medium or by a transmission wave in the transmission medium. The "transmission medium", which transmits the computer program, refers to a medium having a function of transmitting information like a network (a communication network) such as the Internet or a communication line (a communication wire) such as a telephone line.

The computer program may be a computer program for realizing a part of the functions explained above. Further, the computer program may be a computer program that can realize the functions in a combination with a computer program already recorded in the computer system, a so-called differential file (a differential program).

**Claims**

1. A robot (20) comprising an arm (A), wherein
   an image pickup section (21) is provided in the arm (A), the arm (A) is configured to be moved to a plurality of image pickup positions, and
   when a predetermined region (SW) in an image pickup region (CA), where the image pickup section (21) is capable of picking up an image, is set to coincide with, among image regions of an image picked up by the image pickup section (21) when the arm is moved to an image pickup position for picking up an image of one of a plurality of target objects (O), the image region including the target object (O) or a region smaller than the image region, the robot (20) is configured to detect information concerning the target object (O) on the basis of the image of the target object (O) picked up by the image pickup section (21) in the position and to grip the target object (O) on the basis of the detected information.

2. The robot (20) according to claim 1, wherein
   each of the plurality of target objects (O) is disposed in each of cells (C) in a pallet (P), and
   the image region including the target object (O) is the image region on an inner side of the cell (C) in the image region of the picked-up image.

3. The robot (20) according to claim 1 or 2, wherein a second angle, which is an angle of the predetermined region, changes according to a change of a first angle, which is an angle of each of joints included in the robot (20).

4. The robot (20) according to claim 3, wherein
the first angle is an angle with respect to a first reference direction associated with each of the joints,
the second angle is an angle between a second reference direction associated with the image pickup section (21)
and a third reference direction associated with the predetermined region, and
the third reference direction does not change in the change of the second angle.

5. The robot (20) according to claim 3, wherein
the first angle is an angle with respect to a first reference direction associated with each of the joints,
the second angle is an angle between a second reference direction associated with the image pickup section (21)
and a third reference direction associated with the predetermined region, and
the second angle changes according to the first angle and a gain.

6. The robot (20) according to any of claims 3 to 5, wherein the robot (20) is capable of operating according to two modes, that is, a first mode in which the second angle changes according to the first angle and a second mode in which the second angle does not change according to the first angle.

7. The robot (20) according to any one of the preceding claims, wherein a shape of the predetermined region (SW) is a shape corresponding to a shape of the image region including the target object (O) or a region smaller than the image region.

8. The robot (20) according to any one of the preceding claims, wherein, when the picked-up image is displayed on a display section (35), the predetermined region (SW) is displayed on the display section (35) together with the picked-up image.

9. A robot control device for controlling the robot (20) according to any one of the preceding claims.

10. A robot system (1) comprising:

the robot (20) according to any one of claims 1 to 8; and
a robot control device (30) configured to control the robot (20).

11. A method of operating a robot (20) comprising an arm (A), wherein
a predetermined region (SW) in an image pickup region (CA), where an image pickup section (21) provided in the arm (A) is capable of picking up an image, is set to coincide with, among image regions of an image picked up by the image pickup section (21) when the arm is moved to an image pickup position for picking up an image of one of a plurality of target objects (O), the image region including the target object (O) or a region smaller than the image region, and
the robot (20) detects information concerning the target object (O) on the basis of the image of the target object (O) picked up by the image pickup section (21) in the position and grips the target object (O) on the basis of the detected information.

12. The method of operating a robot (20) according to claim 11, wherein
each of the plurality of target objects (O) is disposed in each of cells (C) in a pallet (P), and
the image region including the target object (O) is the image region on an inner side of the cell (C) in the image region of the picked-up image.

13. The method of operating a robot (20) according to claim 11 or 12, wherein a second angle, which is an angle of the predetermined region, changes according to a change of a first angle, which is an angle of each of joints included in the robot (20).

14. The method of operating a robot (20) according to claim 13, wherein
the first angle is an angle with respect to a first reference direction associated with each of the joints,
the second angle is an angle between a second reference direction associated with the image pickup section (21)
and a third reference direction associated with the predetermined region, and
the third reference direction does not change in the change of the second angle.

**15.** The method of operating a robot (20) according to claim 13, wherein
the first angle is an angle with respect to a first reference direction associated with each of the joints,
the second angle is an angle between a second reference direction associated with the image pickup section (21)
and a third reference direction associated with the predetermined region, and
the second angle changes according to the first angle and a gain.

FIG. 1

EP 3 290 164 A2

FIG. 2

CPU ⌐31

INPUT RECEIVING SECTION ⌐33

DISPLAY SECTION ⌐35

Bus

STORING SECTION ⌐32

COMMUNICATION SECTION ⌐34

TO ROBOT

# FIG. 3

EP 3 290 164 A2

FIG. 4

FIG. 5

START

↓

| MOVE POSITION AND POSTURE OF CONTROL POINT | ~S50 |

↓

| STORE INITIAL POSITION AND POSTURE INFORMATION | ~S60 |

↓

END

# FIG. 6

FIG. 7

EP 3 290 164 A2

FIG. 8

FIG. 9

FIG.10

FIG.11

EP 3 290 164 A2

START

S100

FIRST MODE ?

NO

YES

S110
FOR EACH OF IMAGE PICKUP POSITIONS

S190
FOR EACH OF IMAGE PICKUP POSITIONS

S120
MOVE CONTROL POINT

S200
MOVE CONTROL POINT

S130
CALCULATE SECOND ANGLE

S210
IMAGE PICKUP

S140
SET PREDETERMINED REGION

S220
ACQUIRE IMAGE

S150
IMAGE PICKUP

S230
CALCULATE POSITION AND POSTURE OF TARGET OBJECT

S160
ACQUIRE IMAGE

S240
MOVE TARGET OBJECT TO MATERIAL SUPPLY REGION

S170
CALCULATE POSITION AND POSTURE OF TARGET OBJECT

END IMAGE PICKUP POSITION

S180
MOVE TARGET OBJECT TO MATERIAL SUPPLY REGION

END IMAGE PICKUP POSITION

END

FIG.12

FIG.13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

•   JP 2011110629 A